(19)

Europäisches
Patentamt

European
Patent Office

Office européen
des brevets

(11) **EP 2 419 957 B1**

(12) **EUROPEAN PATENT SPECIFICATION**

(45) Date of publication and mention
of the grant of the patent:
**25.03.2015 Bulletin 2015/13**

(21) Application number: **10793596.7**

(22) Date of filing: **28.06.2010**

(51) Int Cl.:
*H01M 10/0565* (2010.01)     *H01M 10/0525* (2010.01)
*H01M 2/16* (2006.01)       *H01M 4/66* (2006.01)
*H01M 2/14* (2006.01)       *H01M 4/525* (2010.01)
*H01M 4/583* (2010.01)

(86) International application number:
**PCT/CN2010/074637**

(87) International publication number:
**WO 2011/000301 (06.01.2011 Gazette 2011/01)**

(54) **POLYMER COMPOSITE ELECTROLYTE, BATTERY COMPRISING POLYMER COMPOSITE ELECTROLYTE AND METHOD FOR PREPARING THE SAME**

POLYMERVERBUNDELEKTROLYT, BATTERIE MIT DEM POLYMERVERBUNDELEKTROLYT UND HERSTELLUNGSVERFAHREN DAFÜR

ELECTROLYTE POLYMÈRE COMPOSITE, BATTERIE COMPRENANT L'ÉLECTROLYTE POLYMÈRE COMPOSITE ET PROCÉDÉ DE PRÉPARATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.06.2009  CN 200910150780**

(43) Date of publication of application:
**22.02.2012 Bulletin 2012/08**

(73) Proprietor: **BYD Company Limited**
**Shenzhen 518118 (CN)**

(72) Inventors:
 • **LIANG, Shishuo**
  **Guangdong 518118 (CN)**

 • **LUO, Yong**
  **Guangdong 518118 (CN)**
 • **YU, Zhengri**
  **Guangdong 518118 (CN)**

(74) Representative: **Hoffmann Eitle**
**Patent- und Rechtsanwälte PartmbB**
**Arabellastraße 30**
**81925 München (DE)**

(56) References cited:
 **CN-A- 1 259 773      CN-A- 1 298 558
 CN-A- 1 610 170      US-A1- 2001 008 734
 US-A1- 2004 214 089   US-A1- 2009 087 728
 US-A1- 2009 087 728   US-B2- 6 537 703**

**Description**

FIELD

The disclosure relates to battery, more particularly to a polymer composite electrolyte for a battery, a method for preparing the same, and a battery comprising the same.

BACKGROUND

Polymer lithium batteries have high specific energy, good safety performance and advanced manufacturing processes. Polymer membranes are not only an important part of polymer lithium batteries, but also an important factor determining the performance of batteries. Polymer membranes are required to have uniform porous structures, high porosities, good ionic conductivities, high mechanical strengths and stable interfacial properties. However, the prior methods of manufacturing porous polymer membranes have complex processes, long operation cycles, and high demands for equipments and environments.

SUMMARY

In viewing thereof, the present disclosure is provided to solve at least a problem existing in the art. Accordingly, a polymer composite electrolyte may need to be provided, which may have excellent ion conductivity with improved mechanical performance, thus overcoming the complexity in the art with long operation cycle and strict requirements on manufacturing devices or environment. Further, a method of preparing the same may need to be provided, which may simplify manufacturing process thereof with enhanced operability. Still further, a battery comprising the same may also need to be provided accordingly.

According to an aspect of the disclosure, a polymer composite electrolyte comprises a first polymeric matrix, a second polymeric matrix, and a lithium salt. The first polymeric matrix comprises pores. The second polymeric matrix is disposed in at least some of the pores of the first polymeric matrix. The lithium salt is disposed in at least some of the pores of the first polymeric matrix wherein the polymer of the first polymeric matrix and the polymer of the second polymeric matrix comprise the same monomer, wherein the polymer of the first polymeric matrix and the polymer of the second polymeric matrix have different weight-average molecular weight, and wherein the difference between the weight-average molecular weight of the polymers of the first and second matrices as measured by Gel Permeation Chromatography (GPC) is 20,000 to 2,000,000 g/mol (Daltons).

According to another aspect of the disclosure, a method of preparing a polymer composite electrolyte is provided, comprising the steps of: preparing a first polymeric matrix comprising pores; applying a polymer solution to the first polymeric matrix; removing the solvent from the polymer solution so as to dispose a second polymeric matrix within the pores of the first polymeric matrix; and applying a lithium salt solution to dispose lithium salt within the pores of the first polymeric matrix.

According to an embodiment of the disclosure, at least one of the polymer solutions further comprises inorganic particles, and the amount of the inorganic particles is 0.5 wt % to 45 wt %, based on the total weight of the first and second polymeric matrices.

According to an embodiment of the disclosure, the inorganic particles are selected from the group consisting of silicon dioxide, zirconium dioxide, aluminum oxide, titanium dioxide, copper oxide, $\gamma$-LiAlO$_2$, and combinations thereof; and the average particle diameter of the inorganic particles is from 1 nm to 200 nm.

According to yet another aspect of the disclosure, a battery comprises a cathode, an anode, and a polymer composite electrolyte. The polymer composite electrolyte comprises a first polymeric matrix, a second polymeric matrix, and a lithium salt. The first polymeric matrix comprises pores. The second polymeric matrix is disposed in at least some of the pores of the first polymeric matrix. The lithium salt is disposed in at least some of the pores of the first polymeric matrix.

In the polymer composite electrolyte according to the present disclosure, the matrices are mutually penetrated into each other, thus dramatically enhance the mechanical performance of the polymer composite electrolyte. Further, the features as described above enhance ion conductivity of the polymer composite electrolyte at room temperature. Further, the manufacturing process of the polymer composite electrolyte is simplified with easy operability, which may bring less pollution to environment and reduce the manufacturing costs thereof accordingly. In addition, the porous structure of the polymer composite electrolyte is denser with reasonable pore size distribution and pore size, thus further enhancing the mechanical strength of the polymer composite electrolyte and the content of the electrolyte. The battery using the same may have a less rate of short circuiting and smaller inner resistance. And the battery may possess an excellent rate discharge performance and capacity retention rate with prolonged cycle life.

BRIEF DESCRIPTION OF THE DRAWINGS

Exemplary embodiments of the present disclosure will be described in detail based on the following figures.

Fig. 1 shows a cross-sectional view of the polymeric matrices according to one embodiment of the present disclosure. The polymeric matrices include the first polymeric matrix and the second polymeric matrix disposed in the pores of the first polymeric matrix.

Fig. 2 shows a flowchart for preparing a polymer composite electrolyte according to one embodiment of the present disclosure.

Fig. 3 shows a Scanning Electron Micrograph (SEM) of a surface of a first polymeric matrix according to EMBODIMENT 1.

Fig. 4 shows an SEM of a surface of the polymeric matrices according to EMBODIMENT 1. The polymeric matrices include the first polymeric matrix and the second polymeric matrix disposed in the pores of the first polymeric matrix.

DETAILED DESCRIPTION

It will be appreciated by those of ordinary skill in the art that the disclosure may be embodied in other specific forms without departing from the spirit or essential character thereof. The presently disclosed embodiments are therefore considered in all respects to be illustrative and not restrictive.

A polymer composite electrolyte comprises a first polymeric matrix, a second polymeric matrix, and a lithium salt. The first polymeric matrix comprises pores. The second polymeric matrix is disposed in at least some of the pores of the first polymeric matrix. The lithium salt is disposed in at least some of the pores of the first polymeric matrix. The lithium salt is in a form of a solution and/or a gel disposed in the first polymeric matrix. The second polymeric matrix also comprises pores. At least some of the lithium salt is disposed within at least some of the pores of the second polymeric matrix.

The first polymeric matrix is the main structure of the polymer composite electrolyte to accommodate the lithium salt, and to keep the lithium salt stable in the polymer composite electrolyte batteries. Meanwhile, the cathode and anode of the battery are separated by the first polymeric matrix.

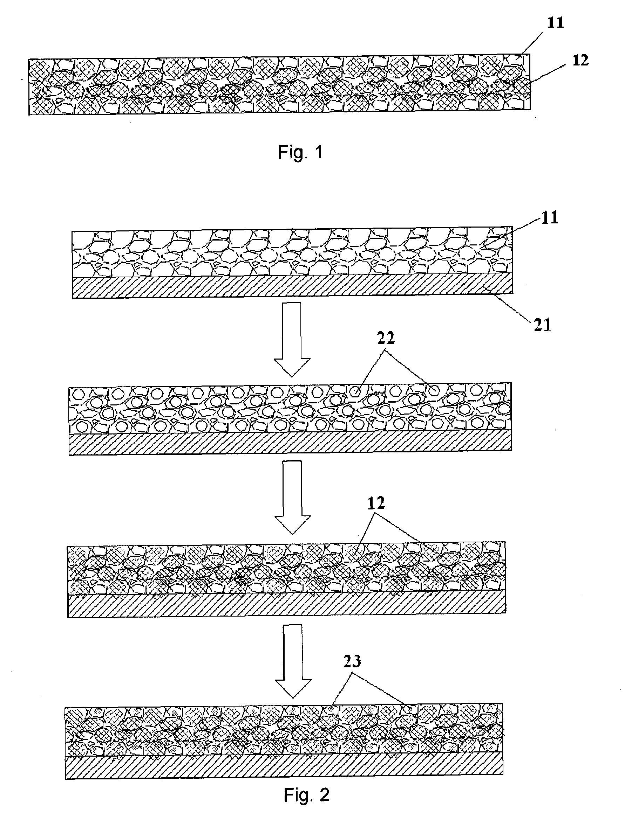

Figure 1 shows a structure of the polymeric matrices. The matrices include the first polymeric matrix 11 and the second polymeric matrix 12. At least part of the second polymeric matrix 12 is disposed in at least some of the pores of the first polymeric matrix 11. At least some of the pores of the first polymeric matrix 11 are not completely filled with the second polymeric matrix 12. Thus, the first polymeric matrix 11 and the second polymeric matrix 12 provide a composite porous structure to accommodate the lithium salt. The composite porous structure makes the pores of the matrices condense. Therefore, it does not require a significant increase in the thickness of the polymer composite electrolyte to improve its mechanical properties. Moreover, the composite porous structure may also increase the retention capacity of the matrices to the lithium salt, and may improve the ionic conductivity of the polymer composite electrolyte at room temperature. Preferably, the weight ratio of the first polymeric matrix to the second polymeric matrix is from 1 to 15. More preferably, the weight ratio is from 2 to 10.

The first polymeric matrix forms the main structure of the electrolyte and provides space for the second polymeric matrix. In some embodiments, the first polymeric matrix has large apertures and high porosity, and at least some of the pores are connected with each other. Preferably, the porosity of the first polymeric matrix is from 20% to 85%. The average diameter of the pores is from 0.05 $\mu$m to 1 $\mu$m. The thickness of the first polymeric matrix is from 4 $\mu$m to 50 $\mu$m. Preferably, the porosity of the first polymeric matrix is from 30% to 80%. More preferably, the average diameter of the pores is from 0.05 $\mu$m to 0.2 $\mu$m. The thickness of the first polymeric matrix is from 5 $\mu$m to 25 $\mu$m. Porosity is defined as the ratio of the volume of the pores to the total volume of the matrix. In some embodiments, both the average pore size and the porosity of the first polymeric matrix are measured by the mercury intrusion method.

The first polymeric matrix is formed from a first polymer. The second polymeric matrix is formed from a second polymer. The first and second polymers may be any suitable polymer. Preferably, the first and second polymers are independently selected from the group consisting of polyolefin, polymethacrylate, polyether, polysulfone, and combinations thereof.

In some embodiments, the first polymer is selected from the group consisting of polyvinylidene fluoride-hexafluoropropene (PVDF-HFP) copolymer, polyvinylidene fluoride-chlorotrifluoroethylene (PVDF-CTFE) copolymer, polyvinylidene fluoride (PVDF), polymethacrylate (PMA), polyethylene oxide (PEO), poly(oxypropylene), polyacrylonitrile (PAN), polyvinylchloride (PVC), polyvinyl acetate (PVAc), polyvinylpyrrolidone (PVP), polysulfone (PSF), polyethersulfone (PES), polyacrylamide (PAM), and combinations thereof. In some embodiments, either polyvinylidene fluoride-hexafluoropropene (PVDF-HFP) copolymer or polyvinylidene fluoride-chlorotrifluoroethylene (PVDF-CTFE) copolymer may be a random copolymer, a block copolymer or an alternating copolymer. Preferably, either polyvinylidene fluoride-hexafluoropropene (PVDF-HFP) copolymer or polyvinylidene fluoride-chlorotrifluoroethylene (PVDF-CTFE) copolymer is a random copolymer. The weight-average molecular weight of the first polymer may be 20,000 to 4,000,000 g/mol (Daltons). Preferably, the weight-average molecular weight of the first polymer is from 100,000 to 2,500,000 g/mol (Daltons).

In some embodiments, the second polymer is selected from the group consisting of polyvinylidene fluoride-hexafluoropropene (PVDF-HFP) copolymer, polyvinylidene fluoride-chlorotrifluoroethylene (PVDF-CTFE) copolymer, polyvinylidene fluoride (PVDF), poly(meth)acrylate (PMA), polyethylene oxide (PEO), poly(oxypropylene), polyacrylonitrile (PAN), polyvinylchloride (PVC), polyvinyl acetate (PVAc), polyethylene glycol dimethyl ether, polyvinylpyrrolidone (PVP), polysulfone (PSF), polyethersulfone (PES), polyacrylamide (PAM), and combinations thereof. The weight-average molecular weight of the second polymer may be 20,000 to 4,000,000 g/mol (Daltons). Preferably, the weight-average molecular weight of the second polymer is from 100,000 to 1,500,000 g/mol (Daltons).

The first and second polymers have different weight-average molecular weights. Because of the polymers with different monomers have different physical and chemical properties, and the polymers with different weight-average molecular weight have different segmental movement properties, the difference of properties may further enhance the ability of maintaining the lithium salt of the first and second polymeric matrices. Accordingly, the first and second polymers are preferably different polymers. In some embodiments, the first and second polymers are the same type polymers with different weight-average molecular weight. The difference between the weight-average molecular weight of the polymers of the first and second matrices is from 20,000 to 2,000,000 g/mol (Daltons).

In some embodiments, at least part of the second polymer is disposed in at least part of the pores of the first polymeric matrix, and other parts of the second polymer is coated on the surface of the first polymeric matrix. In some embodiments, the thickness of the second polymer coated on the first polymeric matrix is from 1 $\mu$m to 20 $\mu$m. In other embodiments, it is from 1 $\mu$m to 10 $\mu$m.

In some embodiments, at least one of the first and second polymeric matrices comprises inorganic particles. The amount of the inorganic particles is from about 0.5 wt % to 45 wt %, based on the total weight of the first and second polymeric matrices. The inorganic particles may further increase the mechanical strength and the heat resistance. Additionally, the crystallinity of the first and second polymers may be adjusted by introducing the inorganic particles, thus further improving the ability of maintaining lithium salts of the first and second polymeric matrices. Furthermore, the introduction of the inorganic particles may further decrease the cost of the polymer composite electrolyte. In some embodiments, the inorganic particles are selected from the group consisting of silicon dioxide, zirconium dioxide, aluminum oxide, titanium dioxide, copper oxide, $\gamma$-LiAlO$_2$, and combinations thereof. Preferably, the average particle diameter of the inorganic particles is from 1 nm to 200 nm, more preferably, from 5 nm to 100 nm.

In some embodiments, in order to make the polymer composite electrolyte have more excellent mechanical strength, better isolation performance for the cathode and the anode, and higher content of the lithium salt, the thickness of the first polymeric matrix is from 4 $\mu$m to 50 $\mu$m, preferably, from 5 $\mu$m to 25 $\mu$m. The average diameter of the pores is from 0.01 $\mu$m to 1 $\mu$m, preferably, from 0.01 $\mu$m to 0.1 $\mu$m. The porosity of the first polymeric matrix is from 15% to 80%, preferably, from 20% to 70%.

In some embodiments, the composite electrolyte further comprises a porous base. The porous base comprises a third polymeric matrix. The third polymeric matrix also comprises pores. The first polymeric matrix is coated on at least one surface of the porous base. The second polymeric matrix is disposed in at least part of the pores of first polymeric matrix. The at least part of the pores of the first matrix and the pores of the third polymeric matrix are connected from one surface of the polymer composite electrolyte to another. The porous base may further enhance the mechanical strength of the polymer composite electrolyte and further increase the safety of the battery. The connected pores allow lithium ions to pass through the first and second matrices and the electrons to be held.

The third polymeric matrix is formed by a third polymer. The third polymer may be any suitable polymer. Preferably, the third polymer is selected from the group consisting of polyethylene, polypropylene, polyimide, polyurethane, cellulose, nylon, polytetrafluoroethylene, copolymers thereof, and combinations thereof. Preferably, the weight-average molecular weight of the third polymer is from 20,000 to 4,000,000 g/mol (Daltons).

In one embodiment, the thickness of the porous base is from 4 $\mu$m to 50 $\mu$m. The average diameter of pores of the porous base is from 0.01 $\mu$m to 0.1 $\mu$m. The porosity of the porous base is 20% to 60%. Preferably, the thickness of the porous base is from 8 $\mu$m to 40 $\mu$m. The average diameter of the pores is from 0.03 $\mu$m to 0.06 $\mu$m. The porosity of the porous base is from 30% to 50%.

In one embodiment, the first polymeric matrix is coated on at least one surface of the porous base. In another embodiment, the first polymeric matrix is coated on the two opposite surfaces of the porous base.

The lithium salt may be any suitable lithium salt. Preferably, the lithium salt is selected from the group consisting of lithium hexafluorophosphate, lithium perchlorate, lithium tetrafluoroborate, lithium trifluoromethanesulfonate, lithium bis(trifluoromethylsulfonyl)imide, lithium bis(oxalate)borate, and combinations thereof.

In some embodiments, the lithium salt is in a form of a solution or a gel to fill into the pores of the first polymeric matrix. The lithium salt solution or gel may further comprise an organic solvent. The organic solvent is selected from the group consisting of ethylene carbonate, propylene carbonate, diethyl carbonate, dimethyl carbonate, methyl ethyl carbonate, dimethoxy carbonate, vinylene carbonate, and combinations thereof.

Because the pore size distribution and the pore size of the first polymeric matrix are more reasonable, the first and second polymeric matrices may absorb more lithium salt. In some embodiments, the weight ratio of the lithium salt to the first and second polymeric matrices is from 0.5:1 to 15:1, preferably, from 1:1 to 8:1, more preferably, from 0.5:1 to 0.8:1. In other embodiments, when the polymer composite electrolyte further comprises a porous base, the amount of the lithium salt is from 30 wt % to 95 wt %, preferably, from 70 wt % to 90 wt %, based on the total weight of the polymer composite electrolyte.

In some embodiments, the thickness of the polymer composite electrolyte is from 4 $\mu$m to 80 $\mu$m, preferably, from 10 $\mu$m to 50 $\mu$m, more preferably, from 30 $\mu$m to 50 $\mu$m.

A method for preparing a polymer composite electrolyte disclosed above is provided. The method comprises the steps of: preparing a first polymeric matrix comprising pores; applying a polymer solution to the first polymeric matrix; removing the solvent from the polymer solution so as to dispose a second polymeric matrix within the pores of the first polymeric matrix; and applying a lithium salt solution to dispose lithium salt within the pores of the first polymeric matrix.

In some embodiments, the method for preparing the polymer composite electrolyte further comprises the step of: preparing a porous base; and applying the first polymeric matrix to at least one surface of the porous base. The first polymeric matrix may be prepared from a solution comprising the polymer of the first polymeric matrix and a first polymeric matrix solvent. The first polymeric matrix is formed on the at least one surface of the porous base after the solvent is removed. Because of the first polymer fills into at least part of the pores of the third polymeric matrix, the bonding strength of the first polymeric matrix and the third polymeric matrix may be enhanced.

The polymer solution that provides the first polymeric matrix comprises a first polymer and a first solvent. The polymer solution that provides the second polymeric matrix comprises a second polymer and a second solvent.

The method of applying the polymer solution may be any suitable method. For example, the method may be coating, dipping, or spraying. The weight ratio of the first polymer to the second polymer is from 1 to 15 by controlling the amount of the polymer solution that provides the second polymeric matrix.

In one embodiment, the first polymeric matrix is dipped into the polymer solution that provides the second polymeric matrix to absorb the polymer solution sufficiently for 0.1 to 60 minutes, preferably, 2 to 30 minutes. Then the first polymeric matrix is placed into an oven with a blower device for heating at 25°C to 80°C for 10 to 60 minutes to remove the second solvent, thus forming the second polymeric matrix.

In some embodiments, at least part of the pores of the first polymeric matrix is not completely filled with the second polymer, which is achieved by controlling the composition of the second polymer, and the porosity and the average pore size of the first polymeric matrix.

The first solvent may dissolve the first polymer and may be volatilized to form pores in the first polymeric matrix. In some embodiments, the first solvent is selected from the group consisting of acetone, N,N-dimethylformamide, N,N-dimethylacetamide, N-methyl-2-pyrrolidone, acetonitrile, dimethyl sulfoxide, butanone, tetrahydrofuran, and combinations thereof. The weight ratio of the first polymer to the first solvent is from 2:100 to 40:100, preferably, from 3:100 to 30:100.

In some embodiments, the polymer solution that provides the first polymeric matrix further comprises a first pore-forming agent which may further improve the pore-forming performance of the first polymer solution, make the pore size distribution and the pore size of the pores more uniform and form more open pores. The first pore-forming agent may be any suitable material. Preferably, the first pore-forming agent is selected from the group consisting of water, toluene, ethanol, butanol, glycerol, isopropanol, butanediol and combinations thereof. The weight ratio of the first polymer to the first pore-forming agent is from 1:0.5 to 1:5, preferably, from 1:0.5 to 1:2.5.

In some embodiments, the polymer solution that provides the first polymeric matrix further comprises first inorganic particles. The weight ratio of the first polymer to the first inorganic particles is from 1:0.1 to 1:0.8, preferably, from 1:0.1 to 1:0.7. The first inorganic particles may be any suitable material. Preferably, the first inorganic particles are selected from the group consisting of silicon dioxide, zirconium dioxide, aluminum oxide, titanium dioxide, copper oxide, $\gamma$-LiAlO$_2$, and combinations thereof. The average particle diameter of the first inorganic particles is from 1 nm to 200 nm, preferably, from 5 nm to 100 nm.

The amount of the first polymer solution is sufficient to form a first polymer matrix with a thickness of 4 $\mu$m to 50 $\mu$m, preferably, 5 nm to 25 nm.

The second solvent may be any suitable solvent. The second solvent may dissolve the second polymer and may be volatilized to form pores in the second polymeric matrix. In some embodiments, the second solvent is selected from the group consisting of acetone, N,N-dimethylformamide, N,N-dimethylacetamide, N-methyl-2-pyrrolidone, acetonitrile, dimethyl sulfoxide, butanone, tetrahydrofuran, and combinations thereof. The weight ratio of the second polymer to the second solvent is from 1:100 to 20:100, preferably, from 2:100 to 10:100.

In some embodiments, the second polymer solution further comprises a second pore-forming agent which may further improve the pore-forming performance of the second polymer solution, make the pore size distribution and the pore size of the pores more uniform and form more open pores. Preferably, the second pore-forming agent is selected from the group consisting of water, toluene, ethanol, butanol, glycerol, isopropanol, butanediol, and combinations thereof. The weight ratio of the second polymer to the second pore-forming agent is from 1:0.1 to 1:4, preferably, from 1:0.5 to 1:2.

In some embodiments, the second polymer solution further comprises second inorganic particles. The weight ratio of the second polymer to the second inorganic particles is from 1:0.1 to 1:0.5, preferably, from 1:0.1 to 1:0.3. Preferably, the second inorganic particles are selected from the group consisting of silicon dioxide, zirconium dioxide, aluminum oxide, titanium dioxide, copper oxide, $\gamma$-LiAlO$_2$, and combinations thereof. Preferably, the average particle diameter of the second inorganic particles is from 1 nm to 200 nm, preferably, from 5 nm to 100 nm.

In yet another embodiment, the method for preparing the polymer composite electrolyte further comprises the steps of: preparing a porous base; and applying a first polymeric matrix on the surface of the porous base. The method of applying the first polymeric matrix may be any suitable methods, for example, cold pressing, hot pressing or using an adhesive.

In one embodiment, the method of applying the first polymer solution into at least part of the pores of the porous base may be coating, dipping, or spraying. In one embodiment, the porous base is dipped into the first polymer solution to absorb the first polymer solution sufficiently. Then the porous base coated with the first polymer solution is placed into an oven for heating at 20°C to 200°C for 0.1 to 600 minutes, preferably, 10 to 300 minutes.

In some embodiments, at least part of the pores of the first polymeric matrix is not completely filled with the second polymer. This is achieved by controlling the composition of the second polymer, and the porosity and the average pore size of the first polymeric matrix.

The method of applying the lithium salt into the first polymeric matrix may be any suitable method. In one embodiment, the first polymeric matrix is dipped into the lithium salt solution for 0.1 to 60 minutes.

Figure 2 shows a flowchart of preparing a polymer composite electrolyte according to one embodiment of the present disclosure. The polymer solution including the first polymer and the first solvent is coated onto one surface of the porous base 21. The first solvent is removed to obtain a first polymeric matrix 11 coated on the porous base 21. The polymer solution 22 including the second polymer and the second solvent is applied into the first polymeric matrix 11. The second solvent is removed to obtain the second polymeric matrix 12 disposed in the pores of the first polymeric matrix 11. Then the first polymeric matrix is dipped into a solution of lithium salt 23. Under capillary action of the pores of the first polymeric matrix 11, the lithium salt is filled within at least a part of the pores of the first polymeric matrix to obtain a polymer composite electrolyte.

A polymer lithium battery is also provided, comprising a cathode, an anode and a polymer composite electrolyte disclosed above. In some embodiments, the cathode is an aluminum foil containing lithium cobalt oxide, and the anode is a copper foil containing graphite.

Hereinafter, the invention will be described in detail with reference to the following embodiments.

In some embodiments, the weight-average molecular weight of the first, second and third polymers were measured by a method of Gel Permeation Chromatography (GPC).

POLYMER COMPOSITE ELECTROLYTE EMBODIMENTS 1-7

EMBODIMENT 1 (Embodiment not falling within the scope of the invention as claimed)

The embodiment discloses a polymer composite electrolyte and a method for preparing the same.

A polyvinylidene fluoride-hexafluoropropene (PVDF-HFP) copolymer and toluene were dissolved in acetone to obtain a mixture. The mixture was stirred uniformly to form a first polymer solution. Based on the weight of the first polymer solution, the amount of the polyvinylidene fluoride-hexafluoropropene (PVDF-HFP) copolymer was about 6 wt %, the amount of toluene was about 14 wt %, and the amount of acetone was about 80 wt %. The polyvinylidene fluoride-hexafluoropropene (PVDF-HFP) copolymer had a weight-average molecular weight of about 300,000 g/mol (Daltons).

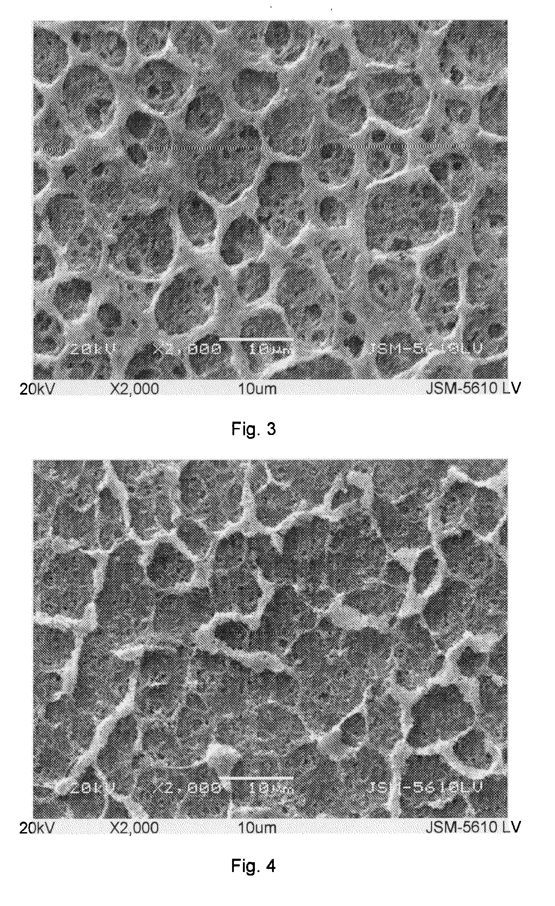

The first polymer solution was coated onto a polyethylene porous base, which had a porosity of about 45%, an average pore diameter of about 0.032 $\mu$m, and a thickness of about 16 $\mu$m. Polyethylene had a weight-average molecular weight of about 250,000 g/mol (Daltons). The coated polyethylene porous base was dried at a temperature of 25 °C for 30 minutes to form a first polymeric matrix on one surface of the polyethylene porous base, with a thickness of about 12 $\mu$m. The surface morphology of the polyethylene porous base thus formed was observed by Scanning Electron Microscope, as shown in Fig. 3.

A polyvinylidene fluoride-hexafluoropropene (PVDF-HFP) copolymer, silicon dioxide particles (with an average particle diameter of about 10 nm), and toluene were dissolved in acetone to obtain a mixture. The mixture was stirred for 0.5 hour to form a second polymer solution. Based on the weight of the second polymer solution, the amount of the polyvinylidene fluoride-hexafluoropropene (PVDF-HFP) copolymer was about 4 wt %, the amount of the acetone was about 88 wt %, the amount of the toluene was about 7 wt %, and the amount of the silicon dioxide particles was about 1 wt %. The polyvinylidene fluoride-hexafluoropropene (PVDF-HFP) copolymer had a weight-average molecular weight of about 300,000 g/mol (Daltons).

The first polymeric matrix was immersed into the second polymer solution for 2 minutes, and dried at a temperature of 30°C for 10 minutes to form a second polymeric matrix disposed in the first polymeric matrix. The first and second matrices had a whole thickness of about 28 μm. The weight ratio of the first polymer to the second polymer was 8:1. The surface morphology of the first and second matrices was observed by Scanning Electron Microscope, as shown in Fig. 4.

The first and second polymeric matrices were immersed into a lithium salt solution comprising 1 M lithium hexafluorophosphate, and a mixed solvent of ethylene carbonate and dimethyl carbonate with a volume ratio of about 1:1, for 20 minutes to form a polymer composite electrolyte.

EMBODIMENT 2

The embodiment discloses a polymer composite electrolyte and a method for preparing the same.

A polyvinylidene fluoride (PVDF) and toluene were dissolved in N-methyl-2-pyrrolidone to obtain a mixture. The mixture was stirred uniformly to form a first polymer solution. Based on the weight of the first polymer solution, the amount of the polyvinylidene fluoride (PVDF) copolymer was about 6 wt%, the amount of toluene was about 14 wt%, and the amount of N-methyl-2-pyrrolidone was about 80 wt%. The polyvinylidene fluoride (PVDF) copolymer had a weight-average molecular weight of about 500,000 g/mol (Daltons).

The first polymer solution is coated on a polyethylene porous base, which is the same as in EMBODIMENT 1. The coated polyethylene porous base was dried at a temperature of 60 °C for 240 minutes to form a first polymeric matrix on one surface of the polyethylene porous base, with a thickness of about 12 μm.

A polyvinylidene fluoride-hexafluoropropene (PVDF-HFP) copolymer, silicon dioxide particles (with an average particle diameter of about 10 nm), and ethanol were dissolved in acetone to obtain a mixture. The mixture was stirred for 1 hour to form a second polymer solution. Based on the weight of the second polymer solution, the amount of the polyvinylidene fluoride-hexafluoropropene (PVDF-HFP) copolymer was about 4 wt%, the amount of acetone was about 88 wt%, the amount of ethanol was about 7 wt%, and the amount of the silicon dioxide particles was about 1 wt%. The polyvinylidene fluoride-hexafluoropropene (PVDF-HFP) copolymer had a weight-average molecular weight of about 300,000 g/mol (Daltons).

The first polymeric matrix was immersed into the second polymer solution for 30 minutes, and dried at a temperature of 35 °C for 15 minutes to form a second polymeric matrix. The first and second matrices have a thickness of about 28 μm. The weight ratio of the first polymer to the second polymer was about 10:1.

The first and second polymeric matrices were immersed into a solution comprising 1 M lithium hexafluorophosphate, and a mixed solvent of ethylene carbonate and dimethyl carbonate with a volume ratio of about 1:1, for 20 minutes to form a polymer composite electrolyte.

EMBODIMENT 3

The embodiment discloses a polymer composite electrolyte and a method for preparing the same.

A polymethacrylate (PMA), titanium dioxide particles (with an average particle diameter of 50 nm) and water were dissolved in N,N-dimethylformamide to obtain a mixture. The mixture was stirred uniformly to form a first polymer solution. Based on the weight of the first polymer solution, the amount of polymethacrylate (PMA) was about 10 wt%, the amount of N,N-dimethylformamide was about 83 wt%, the amount of water was about 5 wt%, and the amount of the titanium dioxide particles was about 2 wt%. The polymethacrylate (PMA) had a weight average molecular weight of about 1,000,000 g/mol (Daltons).

The first polymer solution was coated onto a polypropylene porous base, which had a porosity of 36%, an average pore diameter of about 0.046 μm, and a thickness of about 8 μm. Polypropylene had a weight average molecular weight of about 1,500,000 g/mol (Daltons). The coated polypropylene porous base was dried at a temperature of 80 °C for 20 minutes to form a first polymeric matrix on one surface of the polypropylene porous base, with a thickness of about 25 μm.

A polyvinyl acetate (PVAc) and ethanol were dissolved in acetone to obtain a mixture. The mixture was stirred for 2 hours to form a second polymer solution. Based on the weight of the second polymer solution, the amount of polyvinyl acetate (PVAc) was about 4 wt%, the amount of acetone was about 92 wt%, and the amount of ethanol was about 4 wt%. The polyvinyl acetate (PVAc) had a weight-average molecular weight of about 200,000 g/mol (Daltons).

The first polymeric matrix was immersed into the second polymer solution for 5 minutes, and dried at a temperature of 30 °C for 30 min to form a second polymeric matrix. The first and second matrices had a whole a thickness of about 37 μm. The weight ratio of the first polymer to the second polymer was about 15:1.

The polymeric matrices were immersed into a solution comprising 1.5 M bis(trifluoromethylsulfonyl)amine lithium salt, and a mixed solvent of ethylene carbonate, dimethyl carbonate, and vinylene carbonate with a volume ratio of about 1:1:0.1, for 30 minutes to form a polymer composite electrolyte.

EMBODIMENT 4

The embodiment discloses a polymer composite electrolyte and a method for preparing the same.

A polyacrylonitrile (PAN) and isopropanol were dissolved in acetonitrile to obtain a mixture. Copper oxide particles (with an average particle diameter of about 100 nm) were added into the mixture. The mixture was stirred uniformly to form a first polymer solution. Based on the weight of the first polymer solution, the amount of polyacrylonitrile (PAN) was about 8 wt%, the amount of acetonitrile was about 81 wt%, the amount of isopropanol was about 10 wt%, and the amount of the copper oxide particles was about 1 wt%. The polyacrylonitrile (PAN) had a weight average molecular weight of about 150,000 g/mol (Daltons).

The first polymer solution was coated on a polytetrafluoroethylene porous base, which had a porosity of about 30%, an average pore diameter of about 0.052 $\mu$m, and a thickness of about 20 $\mu$m. Polytetrafluoroethylene had a weight average molecular weight of about 600,000 g/mol (Daltons). The coated polytetrafluoroethylene porous base was dried at a temperature of 70 °C for 60 minutes to form a first polymeric matrix on one surface of the polytetrafluoroethylene porous base, with a thickness of about 12 um.

A polymethacrylate (PMA), aluminum dioxide particles (with an average particle diameter of about 35 nm) and ethylene glycol were dissolved in tetrahydrofuran to obtain a mixture. The mixture was stirred for 2 hours to form a second polymer solution. Based on the weight of the second polymer solution, the amount of polymethacrylate (PMA) was about 6 wt%, the amount of tetrahydrofuran was about 90 wt%, the amount of ethylene glycol was about 3 wt%, and the amount of the aluminum dioxide particles was about 1 wt%. The polymethacrylate (PMA) had a weight average molecular weight of about 500,000 g/mol (Daltons).

The first polymeric matrix was immersed into the second polymer solution for 10 minutes, and dried at a temperature of 25 °C for 12 minutes to form a second polymeric matrix. The first and second matrices have a whole thickness of about 42 $\mu$m. The weight ratio of the matrices to the polytetrafluoroethylene porous base was about 1:1.

The first and second matrices were immersed into a solution comprising 1 M lithium trifluoromethanesulfonate $LiCF_3SO_3$, and a mixed solvent of propylene carbonate, dimethyl carbonate, and ethylene carbonate with a volume ratio of about 1:1:0.2, for 20 minutes to form a polymer composite electrolyte.

EMBODIMENT 5

The embodiment discloses a polymer composite electrolyte and a method for preparing the same.

A polyvinylidene fluoride-hexafluoropropene (PVDF-HFP) copolymer and butanediol were dissolved in acetone to obtain a mixture. $\gamma$-LiAlO$_2$ particles (with an average particle diameter of about 25 nm) were added into the mixture. The mixture was stirred uniformly to form a first polymer solution. Based on the weight of the first polymer solution, the amount of the polyvinylidene fluoride-hexafluoropropene (PVDF-HFP) copolymer was about 3.5 wt%, the amount of the butanediol was about 3 wt%, the amount of the acetone was about 92.5 wt%, and the amount of the $\gamma$-LiAlO$_2$ particles was about 1 wt%. The polyvinylidene fluoride-hexafluoropropene (PVDF-HFP) copolymer had a weight average molecular weight of about 2,500,000 g/mol (Daltons).

The first polymer solution was coated onto a polypropylene/ polyethylene /polypropylene (PP/PE/PP) copolymer porous base, which had a porosity of about 45%, an average pore diameter of about 0.035 $\mu$m, and a thickness of about 38 $\mu$m. The polypropylene/ polyethylene /polypropylene (PP/PE/PP) copolymer had a weight average molecular weight of about 1,100,000 g/mol (Daltons). The coated PP/PE/PP copolymer porous base is dried at a temperature of 25 °C for 18 minutes to form a first polymeric matrix on one surface of the PP/PE/PP copolymer porous base, with a thickness of about 8 $\mu$m.

A polyvinylidene fluoride-hexafluoropropene (PVDF-HFP) copolymer and butanediol were dissolved in butanone to obtain a mixture. $\gamma$-LiAlO$_2$ particles (with an average particle diameter of about 25 nm) particles were added into the mixture. The mixture was stirred uniformly to form a second polymer solution. Based on the weight of the second polymer solution, the amount of the polyvinylidene fluoride-hexafluoropropene (PVDF-HFP) copolymer was about 3 wt%, the amount of butanediol was about 3 wt%, the amount of butanone was about 93.5 wt%, and the amount of the $\gamma$-LiAlO$_2$ particles was about 0.5 wt%. The polyvinylidene fluoride-hexafluoropropene (PVDF-HFP) copolymer had a weight average molecular weight of about 500,000 g/mol (Daltons).

The first polymeric matrix was immersed into the second polymer solution for 15 minutes, and dried at a temperature of 25 °C for 30 minutes to form a second polymeric matrix. The first and second matrices had a whole thickness of about 50 $\mu$m. The weight ratio of the first and second matrices to the PP/PE/PP copolymer porous base is about 6:1.

The first and second matrices were immersed into a solution comprising 1 M bis(trifluoromethylsulfonyl)amine lithium salt, and a mixed solvent of propylene carbonate, dimethyl carbonate, and vinylene carbonate with a volume ratio of about 1 : 1 : 0.2, for 20 minutes to form a polymer composite electrolyte.

EMBODIMENT 6

The embodiment discloses a polymer composite electrolyte and a method for preparing the same.

A polyvinylidene fluoride-hexafluoropropene (PVDF-HFP) copolymer and butanediol were dissolved in acetone to obtain a mixture. $\gamma$-LiAlO$_2$ particles (with an average particle diameter of about 25 nm) were added into the mixture. The mixture was stirred uniformly to form a first polymer solution. Based on the weight of the first polymer solution, the amount of the polyvinylidene fluoride-hexafluoropropene (PVDF-HFP) copolymer was about 6 wt%, the amount of butanediol was about 10 wt%, the amount of acetone was about 80 wt%, and the amount of the $\gamma$-LiAlO$_2$ particles was about 4 wt%. The polyvinylidene fluoride-hexafluoropropene (PVDF-HFP) copolymer had a weight average molecular weight of about 570,000 g/mol (Daltons).

The first polymer solution was coated on a polypropylene/ polyethylene /polypropylene (PP/PE/PP) porous base, which had a porosity of about 45%, an average pore diameter of about 0.035 $\mu$m, and a thickness of about 36 $\mu$m. The polypropylene/ polyethylene /polypropylene (PP/PE/PP) copolymer had a weight average molecular weight of about 1,100,000 g/mol (Daltons). The coated PP/PE/PP porous base was dried at a temperature of 30 °C for about 36 minutes to form a first polymeric matrix on one surface of the PP/PE/PP porous base, with a thickness of about 10 $\mu$m.

A polyvinylidene fluoride-hexafluoropropene (PVDF-HFP) copolymer and butanediol were dissolved in acetone to obtain a mixture. $\gamma$-LiAlO$_2$ particles (with an average particle diameter of about 25 nm) particles were added into the mixture. The mixture was stirred to form a second polymer solution. Based on the weight of the second polymer solution, the amount of the polyvinylidene fluoride-hexafluoropropene (PVDF-HFP) copolymer was about 2 wt%, the amount of butanediol was about 3 wt%, the amount of acetone was about 94.75 wt%, and the amount of the $\gamma$-LiAlO$_2$ particles was about 0.25 wt%. The polyvinylidene fluoride-hexafluoropropene (PVDF-HFP) copolymer has a weight average molecular weight of about 590,000 g/mol (Daltons).

The first polymeric matrix was immersed into the second polymer solution for 24 minutes, and dried at a temperature of 27 °C for 60 minutes to form a second polymeric matrix. The first and second matrices had a whole thickness of about 50 $\mu$m. The weight ratio of the first and second matrices to the PP/PE/PP porous base was about 7:1.

The matrices were immersed into a solution comprising 1 M bis(trifluoromethylsulfonyl)amine lithium salt, and a mixed solvent of propylene carbonate, dimethyl carbonate, and vinylene carbonate with a volume ratio of about 1 : 1 : 0.2, for 40 minutes to form a polymer composite electrolyte.

EMBODIMENT 7

The embodiment discloses a polymer composite electrolyte and a method for preparing the same.

A polyvinylidene fluoride-chlorotrifluoroethylene (PVDF-CTFE) copolymer and toluene were dissolved in acetone to obtain a mixture. Silicon dioxide particles (with a particle average diameter of about 20 nm) were added into the mixture. The mixture was stirred uniformly to form a first polymer solution. Based on the weight of the first polymer solution, the amount of the polyvinylidene fluoride-chlorotrifluoroethylene (PVDF-CTFE) copolymer was about 20 wt%, the amount of toluene was about 10 wt%, the amount of acetone was about 68 wt%, and the amount of the silicon dioxide particles was about 2 wt%. The polyvinylidene fluoride-chlorotrifluoroethylene (PVDF-CTFE) copolymer had a weight average molecular weight of about 1,200,000 g/mol (Daltons).

The first polymer solution was coated on a polypropylene porous base, which had a porosity of 45 %, an average pore diameter of about 0.036 $\mu$m, and a thickness of about 16 $\mu$m. Polypropylene had a weight average molecular weight of about 600,000 g/mol (Daltons). The coated polypropylene porous base was dried at a temperature of 30°C for 10 minutes to form a first polymeric matrix on one surface of the polypropylene porous base, with a thickness of about 16 $\mu$m.

A polyvinylidene fluoride-chlorotrifluoroethylene (PVDF-CTFE) copolymer and butanol were dissolved in butanone to obtain a mixture. The mixture was stirred for 1.5 hours to form a second polymer solution. Based on the weight of the second polymer solution, the amount of the polyvinylidene fluoride-chlorotrifluoroethylene (PVDF-CTFE) copolymer was about 5 wt%, the amount of butanone was about 85 wt%, and the amount of butanol was about 10 wt%. The polyvinylidene fluoride-chlorotrifluoroethylene (PVDF-CTFE) copolymer had a weight average molecular weight of about 700,000 g/mol (Daltons).

The first polymeric matrix was immersed into the second polymer solution for 10 minutes, and dried at a temperature of 60 °C for 30 minutes to form a second polymeric matrix. The first and second matrices had a whole thickness of about 40 $\mu$m. The weight ratio of the first and second matrices to the polypropylene porous base was about 5:1.

The first and second matrices were immersed into a solution comprising 1 M lithium perchlorate, and a mixed solvent of propylene carbonate, diethyl carbonate, and vinylene carbonate at a volume ratio of about 1 : 1 : 0.2, for 60 minutes to form a polymer composite electrolyte.

COMPARATIVE EMBODIMENT 1

The COMPARATIVE EMBODIMENT 1 was substantially similar to EMBODIMENT 1, with the exception that no second polymer was applied into the first polymeric matrix. Instead, the first polymeric matrix was directly immersed into a lithium salt solution for 20 minutes to form a polymer composite electrolyte.

COMPARATIVE EMBODIMENT 2

The COMPARATIVE EMBODIMENT 2 was substantially similar to EMBODIMENT 2, with the exception that no second polymer was applied into the first polymeric matrix. Instead, the first polymeric matrix was directly immersed into a lithium salt solution for 20 minutes to form a polymer composite electrolyte.

Testing

1. SEM

Surfaces of the polymeric matrices of embodiment 1 are tested with a Scanning Electron Microscopy.

2. Porosity And Average Pore Diameter

The polymeric matrices of embodiments 1-7 and comparative embodiments 1-2 were tested for the porosity and the average pore diameter respectively, according to the standard of GBT 21650.1-2008. The porous base was removed before testing. The results were shown in Table 1.

3. Electrolyte Absorbing Ability

The polymeric matrices of embodiments 1-7 and comparative embodiments 1-2 were immersed into a lithium salt solution comprising 1M lithium hexafluorophosphate, and a mixed solvent of ethylene carbonate and dimethyl carbonate with a volume ratio of 1:1, for 1 hour respectively. After the polymeric matrices were taken out, and the electrolytes on the surface of the polymeric matrices were removed respectively, the polymeric matrices were weighed to calculate the electrolyte absorbing efficiency respectively.
The lithium salt absorbing efficiency was calculated by the formula:

$$\text{Electrolyte Absorbing Efficiency (\%)} = (W_2 - W_1) / W_1 \times 100\%$$

in which $W_1$ was the original weight of the polymeric matrices (g), and $W_2$ was the weight of the polymeric matrices after absorbing the lithium salt (g). The results were recorded in Table 1.

4. Ion Conductivity

Impedance $R_b$ of the polymer composite electrolytes of embodiments 1-7 and comparative embodiments 1-2 were tested at a frequency of about 0.01 Hz to about 106 Hz by a CHI660 electrochemical workstation from Chenhua Instruments Co., Ltd. Shanghai, P.R.C respectively. The ion conductivity was calculated by the following formula:

$$\delta = d / (S \times R_b)$$

in which $d$ is the thickness of the polymer composite electrolyte, and $S$ is the surface area of the electrode that contacts with the electrolyte. The results were shown in Table 1.

Table 1

| | First Polymeric Matrix | | Polymeric Matrices Including First and Second Polymeric Matrices | | Lithium Salt Absorbing Ability (%) | Ion Conductivity (mS/cm) |
|---|---|---|---|---|---|---|
| | Porosity (%) | Average Pore Diameter ($\mu$m) | Porosity (%) | Average Pore Diameter ($\mu$m) | | |
| EMBODIMENT 1* | 60 | 0.121 | 50 | 0.08 | 340 | 1.8 |
| EMBODIMENT 2 | 55 | 0.109 | 42 | 0.069 | 390 | 2.5 |
| EMBODIMENT 3 | 51 | 0.128 | 40 | 0.078 | 364 | 2.4 |
| EMBODIMENT 4 | 80 | 0.15 | 70 | 0.1 | 360 | 3.0 |
| EMBODIMENT 5 | 54 | 0.114 | 36 | 0.058 | 370 | 2.8 |
| EMBODIMENT 6 | 30 | 0.05 | 20 | 0.01 | 350 | 1.9 |
| EMBODIMENT 7 | 62 | 0.112 | 43 | 0.065 | 385 | 2.0 |
| COMPARATIVE EMBODIMENT 1 | 60 | 0.121 | \ | \ | 240 | 0.8 |
| COMPARATIVE EMBODIMENT 2 | 55 | 0.112 | \ | \ | 210 | 0.7 |
| *Embodiment not falling within the scope of the invention as claimed | | | | | | |

As shown in Table 1, the electrolyte absorbing abilities of the polymeric matrices are much higher than those of the polymeric matrices in the prior art, and the ion conductivities of the polymer composite electrolytes are also much higher than those of the polymer composite electrolytes in the prior art.

BATTERY EMBODIMENTS 1-7

The battery embodiments disclose polymer lithium rechargeable batteries and methods for preparing the same.
The polymer composite electrolytes of EMBODIMENTS 1-7 were disposed between anodes and cathodes to form battery cores respectively. Then the battery cores were packaged to form 463446 type polymer lithium recharging batteries 1-7 respectively. The anode was an aluminum foil containing 6.3 g of lithium cobalt oxide, and the cathode was a copper foil containing 3.0 g of artificial graphite.

BATTERY COMPARATIVE EMBODIMENTS 1-2

The battery comparative embodiments were substantially similar to the battery embodiments 1-7, with the exception that the electrolytes were the electrolytes prepared in the comparative embodiments 1-2. The comparative batteries 1-2 were obtained.

Testing of the polymer lithium rechargeable batteries

1. Resistance

The polymer lithium rechargeable batteries 1-7 and the comparative batteries 1-2 (with a standard capacity of 1100 mA×h) were tested in a resistance tester of battery (BS-VR, available from Kinte Co., Ltd. Guangzhou, P.R.C.) respectively. The results were recorded in Table 2.

2. Cycling Ability

The polymer lithium rechargeable batteries 1-7 and comparative batteries 1-2 were charged to 4.2 V respectively.

The voltage of the batteries was maintained for 10 minutes. The batteries were discharged to 3.0 V to complete a cycle respectively. The capacity retention rates after performing the cycle for 500 times were recorded in Table 2.

Table 2

|  | Resistance (mΩ) | Capacity Retention Rate |
|---|---|---|
| BATTERY 1 | 33.9 | 91.6% |
| BATTERY 2 | 32.2 | 94.0% |
| BATTERY 3 | 33.9 | 92.3% |
| BATTERY 4 | 33.7 | 91.2% |
| BATTERY 5 | 32.7 | 93.7% |
| BATTERY 6 | 32.7 | 92.9% |
| BATTERY 7 | 33.8 | 93.5% |
| COMPARATIVE BATTERY 1 | 35.2 | 88.5% |
| COMPARATIVE BATTERY 2 | 35.3 | 89.2% |

As shown in Table 2, the polymer lithium rechargeable batteries 1-7 have smaller resistance and higher capacity retention rate compared to the conventional polymer lithium rechargeable batteries.

3. Rate Discharge Ability

The polymer lithium rechargeable batteries 1-7 and comparative batteries 1-2 were charged to 4.2 V respectively. The voltage of the batteries was maintained for 20 minutes. The batteries were discharged to 3.0 V under 3 C current respectively. Then the batteries were recharged to 4.2 V respectively. The voltage was maintained for 20 minutes and the batteries were discharged to 3.0 V under 4 C current, 3 C current, 2 C current, 1 C current, and 0.2 C current, successively, respectively. Then the discharging capacities were recorded.

The ratios of the discharging capacities under 1 C current, 2 C current, 3 C current, and 4 C current to those discharged under 0.2 C current were calculated to evaluate the rate discharge ability of the batteries. The larger the capacity ratio, the better the rate discharge ability is. The results were shown in Table 3.

Table 3

|  | 1C/0.2C | 2C/0.2C | 3C/0.2C | 4C/0.2C |
|---|---|---|---|---|
| BATTERY 1 | 99.1 % | 96% | 90.8 % | 81.3% |
| BATTERY 2 | 100 % | 97.8 % | 93.4 % | 84.3% |
| BATTERY 3 | 99.4 % | 96.5 % | 91.6 % | 82.6% |
| BATTERY 4 | 99.5 % | 95.5 % | 92.4 % | 82.4% |
| BATTERY 5 | 99.8 % | 96.3 % | 92.4 % | 81.9% |
| BATTERY 6 | 99.3 % | 96.1 % | 92.1 % | 83.5% |
| BATTERY 7 | 99.9 % | 97.5 % | 93.2 % | 84.0% |
| COMPARATIVE BATTERY 1 | 99.5 % | 92.4 % | 85.3 % | 70.5% |
| COMPARATIVE BATTERY 2 | 99.3 % | 90.4 % | 80.8 % | 65.4% |

As shown in Table 3, the ratios of discharging capacities under 1 C current, 2 C current, 3 C current, and 4 C current to those under 0.2 C current of the polymer lithium rechargeable batteries according to some embodiments of the present disclosure are all larger than those of the polymer lithium rechargeable batteries in the prior art. In addition, the larger the discharging current, the more obvious the trend is. Thus, it is obvious from embodiments as described hereinabove that the battery has a dramatically enhanced rate discharge performance, i.e. large-current discharging performance compared with the polymer lithium rechargeable batteries in the prior art.

Although the disclosure has been described in detail with reference to several embodiments, additional variations and modifications exist within the scope and spirit of the disclosure as described and defined in the following claims.

Many modifications and other embodiments of the present disclosure will come to mind to one skilled in the art to which the present disclosure pertains having the benefit of the teachings presented in the foregoing description. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A polymer composite electrolyte comprising:

   a first polymeric matrix comprising pores;
   a second polymeric matrix disposed in at least some of the pores of the first polymeric matrix; and
   a lithium salt disposed in at least some of the pores of the first polymeric matrix, wherein the second polymeric matrix comprises pores, and wherein at least some of the lithium salt is disposed within at least some of the pores of the second polymeric matrix,
   wherein the polymer of the first polymeric matrix and the polymer of the second polymeric matrix comprise the same monomer, wherein the polymer of the first polymeric matrix and the polymer of the second polymeric matrix have different weight-average molecular weight, and wherein the difference between the weight-average molecular weight of the polymers of the first and second matrices as measured by Gel Permeation Chromatography (GPC) is 20,000 to 2,000,000 g/mol (Daltons).

2. The electrolyte of claim 1, wherein the lithium salt is in a form of a solution or a gel, the amount of the lithium salt is 30 wt % to 95 wt %, based on the total weight of the first and second polymeric matrices.

3. The electrolyte of claim 1, wherein the first polymeric matrix has an average pore diameter of 0.01 $\mu$m to 1 $\mu$m, wherein the first polymeric matrix has a porosity of 15% to 80% as measured by the mercury intrusion method according to standard GBT 21650.1-2008, and wherein the first polymeric matrix has a thickness of 4 $\mu$m to 50 $\mu$m.

4. The electrolyte of claim 1, wherein the weight ratio of the first polymeric matrix to the second polymeric matrix is from 1:1 to 15:1.

5. The electrolyte of claim 1, wherein at least one of the first and second polymeric matrices further comprises inorganic particles; and the amount of the inorganic particles is from 0.5 wt % to 45 wt %, based on the total weight of the first and second polymeric matrices.

6. The electrolyte of claim 5, wherein the inorganic particles are selected from the group consisting of silicon dioxide, zirconium dioxide, aluminum oxide, titanium dioxide, copper oxide, $\gamma$-LiAlO$_2$, and combinations thereof; and wherein the average particle diameter of the inorganic particles is from 1 nm to 200 nm.

7. The electrolyte of claim 1, wherein the first and second polymeric matrices each comprise a polymer independently selected from the group consisting of polyolefin, polymethacrylate, polyether, polysulfone, and combinations thereof.

8. The electrolyte of claim 1, wherein the lithium salt is selected from the group consisting of lithium hexafluorophosphate, lithium perchlorate, lithium tetrafluoroborate, lithium trifluoromethanesulfonate, lithium bis(trifluoromethanesulphonyl)imide, lithium bis(oxalate)borate, and combinations thereof.

9. A method of preparing a polymer composite electrolyte according to claim 1, comprising the steps of:

   preparing a first polymeric matrix comprising pores;
   applying a polymer solution to the first polymeric matrix;
   removing the solvent from the polymer solution so as to dispose a second polymeric matrix within the pores of the first polymeric matrix; and
   applying a lithium salt solution to dispose lithium salt within the pores of the first polymeric matrix, wherein the amount of the lithium salt is 30 wt % to 95 wt %, based on the total weight of the first and second polymeric matrices.

10. The method of claim 9, further comprising the step of:

providing a porous base; and

applying the first polymeric matrix to at least one surface of the porous base;

wherein the step of providing a first polymeric matrix comprises

applying a solution comprising the polymer of the first polymeric matrix and a first polymeric matrix solvent to at least one surface of the porous base; and

removing the first polymeric matrix solvent so as to form the first polymeric matrix on the at least one surface of the porous base.

**11.** The method according to claim 10, wherein the porous base comprises a polymer selected from the group consisting of polyethylene, polypropylene, polyimide, polyurethane, cellulose, nylon, polytetrafluoroethylene, copolymers thereof, and combinations thereof.

**12.** The method according to claim 10, wherein the first and second polymeric matrices each comprise a polymer independently selected from the group consisting of polyolefin, polymethacrylate, polyether, polysulfone, and combinations thereof; the solvents of the polymer solutions are each independently selected from the group consisting of acetone, N,N-dimethylformamide, N,N-dimethylacetamide, N-methyl-2-pyrrolidone, acetonitrile, dimethyl sulfoxide, butanone, tetrahydrofuran, and combinations thereof; and wherein at least one of the polymer solutions further comprise a pore-forming agent; and wherein the pore-forming agent is selected from the group consisting of water, toluene, ethanol, butanol, glycerol, isopropanol, butanediol, and combinations thereof.

**13.** A battery comprising:

a cathode;

an anode; and

a polymer composite electrolyte as defined in claim 1.


**Patentansprüche**

**1.** Polymerverbundelektrolyt, umfassend:

eine erste Polymermatrix, die Poren umfasst;

eine zweite Polymermatrix, die in zumindest einigen Poren der ersten Polymermatrix angeordnet ist; und

ein Lithiumsalz, das in zumindest einigen Poren der ersten Polymermatrix angeordnet ist, wobei die zweite Polymermatrix Poren umfasst und wobei zumindest ein Teil des Lithiumsalzes in zumindest einigen Poren der zweiten Polymermatrix angeordnet ist,

wobei das Polymer der ersten Polymermatrix und das Polymer der zweiten Polymermatrix das gleiche Monomer umfassen, wobei das Polymer der ersten Polymermatrix und das Polymer der zweiten Polymermatrix ein unterschiedliches gewichtsmittleres Molekulargewicht aufweisen, und wobei die Differenz zwischen den gewichtsmittleren Molekulargewichten der Polymere der ersten und zweiten Matrix, gemessen durch Gelpermeationschromatographie (GPC), 20.000 bis 2.000.000 g/mol (Dalton) beträgt.

**2.** Elektrolyt nach Anspruch 1, worin das Lithiumsalz in Form einer Lösung oder eines Gels vorliegt, die Menge des Lithiumsalzes 30 Gew-% bis 95 Gew-%, bezogen auf das Gesamtgewicht der ersten und zweiten Polymermatrix, beträgt.

**3.** Elektrolyt nach Anspruch 1, worin die erste Polymermatrix einen durchschnittlichen Porendurchmesser von 0,01 $\mu$m bis 1 $\mu$m aufweist, worin die erste Polymermatrix eine Porosität von 15% bis 80%, gemessen durch das Quecksilber-Intrusionsverfahren nach dem Standard GBT 21650.1-2008, aufweist und worin die erste Polymermatrix eine Dicke von 4 $\mu$m bis 50 $\mu$m aufweist.

**4.** Elektrolyt nach Anspruch 1, worin das Gewichtsverhältnis der ersten Polymermatrix zu der zweiten Polymermatrix 1:1 bis 15:1 ist.

**5.** Elektrolyt nach Anspruch 1, worin zumindest eine der ersten und zweiten Polymermatrix zusätzlich anorganische Partikel umfasst; und die Menge der anorganischen Partikel 0,5 Gew-% bis 45 Gew-%, bezogen auf das Gesamtgewicht der ersten und zweiten Polymermatrix, beträgt.

6. Elektrolyt nach Anspruch 5, worin die anorganischen Partikel aus der Gruppe ausgewählt sind, die aus Siliciumdioxid, Zirkoniumdioxid, Aluminiumoxid, Titandioxid, Kupferoxid, $\gamma$-LiAlO$_2$ und Kombinationen davon, besteht; und worin der durchschnittliche Partikeldurchmesser der anorganischen Partikel 1 nm bis 200 nm beträgt.

7. Elektrolyt nach Anspruch 1, worin die erste und zweite Polymermatrix jeweils ein Polymer enthalten, das unabhängig voneinander aus der Gruppe, bestehend aus Polyolefin, Polymethacrylat, Polyether, Polysulfon und Kombinationen davon, ausgewählt ist.

8. Elektrolyt nach Anspruch 1, worin das Lithiumsalz aus der Gruppe ausgewählt ist, die aus Lithiumhexafluorophosphat, Lithiumperchlorat, Lithiumtetrafluoroborat, Lithiumtrifluormethansulfonat, Lithiumbis(trifluormethansulfonyl)imid, Lithiumbis(oxalato)borat und Kombinationen davon besteht.

9. Verfahren zur Herstellung eines Polymerverbundelektrolyten nach Anspruch 1, umfassend die Schritte:

das Herstellen einer ersten Polymermatrix, die Poren umfasst;
das Aufbringen einer Polymerlösung auf die erste Polymermatrix;
das Entfernen des Lösungsmittels aus der Polymerlösung, um so eine zweite Polymermatrix in den Poren des ersten Polymermatrix anzuordnen; und
das Aufbringen einer Lithiumsalzlösung, um ein Lithiumsalz in den Poren der ersten Polymermatrix anzuordnen, wobei die Menge des Lithiumsalzes 30 Gew-% bis 95 Gew-%, bezogen auf das Gesamtgewicht der ersten und zweiten Polymermatrix,
beträgt.

10. Verfahren nach Anspruch 9, zusätzlich umfassend die Schritte:

das Bereitstellen einer porösen Basis; und
das Aufbringen der ersten Polymermatrix auf mindestens eine Fläche der porösen Basis;
wobei der Schritt des Bereitstellens der ersten Polymermatrix das Aufbringen einer Lösung, die das Polymer der ersten Polymermatrix und ein erste-Polymermatrix-Lösungsmittel umfasst, auf mindestens eine Fläche der porösen Basis; und
das Entfernen des erste-Polymermatrix-Lösungsmittels, um so die erste Polymermatrix auf der mindestens einen Fläche der porösen Basis zu bilden,
umfasst.

11. Verfahren nach Anspruch 10, bei dem die poröse Bais ein Polymer umfasst, das aus der Gruppe, bestehend aus Polyethylen, Polypropylen, Polyimid, Polyurethan, Cellulose, Nylon, Polytetrafluorethylen, deren Copolymeren und Kombinationen davon, ausgewählt ist.

12. Verfahren nach Anspruch 10, bei dem die erste und zweite Polymermatrix jeweils ein Polymer enthält, das unabhängig voneinander aus der Gruppe ausgewählt ist, die aus Polyolefin, Polymethacrylat, Polyether, Polysulfon und Kombinationen davon besteht; die Lösungsmittel der Polymerlösungen jeweils unabhängig voneinander aus der Gruppe ausgewählt sind, die aus Aceton, N,N-Dimethylformamid, N,N-Dimethylacetamid, N-Methyl-2-pyrrolidon, Acetonitril, Dimethylsulfoxid, Butanon, Tetrahydrofuran und Kombinationen davon besteht; und bei dem mindestens eine der Polymerlösungen zusätzlich ein porenbildendes Mittel umfasst; und bei dem das porenbildende Mittel aus der Gruppe ausgewählt ist, die aus Wasser, Toluol, Ethanol, Butanol, Glycerin, Isopropanol, Butandiol und Kombinationen davon besteht.

13. Batterie, umfassend:

eine Kathode;
eine Anode; und
einen Polymerverbundelektrolyten nach Anspruch 1.

**Revendications**

1. Électrolyte composite polymère comprenant :

une première matrice polymère comprenant des pores ;

une deuxième matrice polymère disposée dans au moins certains des pores de la première matrice polymère ; et

un sel de lithium disposé dans au moins certains des pores de la première matrice polymère, où la deuxième matrice polymère comprend des pores, et où au moins une partie du sel de lithium est disposée dans au moins certains des pores de la deuxième matrice polymère,

dans lequel le polymère de la première matrice polymère et le polymère de la deuxième matrice polymère comprennent le même monomère, où le polymère de la première matrice polymère et le polymère de la deuxième matrice polymère ont des poids moléculaires moyens en poids différents, et où la différence entre le poids moléculaire moyen en poids des polymères des première et deuxième matrices telle que mesurée par Chromatographie par Perméation de Gel (GPC) est de 20000 à 2000000 g/mol (Daltons).

2. Électrolyte de la revendication 1, dans lequel le sel de lithium est sous la forme d'une solution ou d'un gel, la quantité du sel de lithium est de 30% en poids à 95% en poids, sur la base du poids total des première et deuxième matrices polymères.

3. Électrolyte de la revendication 1, dans lequel la première matrice polymère a un diamètre moyen de pores allant de 0,01 $\mu$m à 1 $\mu$m, dans lequel la première matrice polymère a une porosité allant de 15% à 80% telle que mesurée par le procédé d'intrusion de mercure selon la norme GBT 21650.1-2008, et dans lequel la première matrice polymère a une épaisseur allant de 4 $\mu$m à 50 $\mu$m.

4. Électrolyte de la revendication 1, dans lequel le rapport en poids de la première matrice polymère sur la deuxième matrice polymère matrice est compris entre 1:1 et 15:1.

5. Électrolyte de la revendication 1, dans lequel au moins l'une des première et deuxième matrices polymères comprend en outre des particules inorganiques ; et la quantité des particules inorganiques est comprise entre 0,5% en poids et 45% en poids, sur la base du poids total des première et deuxième matrices polymères.

6. Électrolyte de la revendication 5, dans lequel les particules inorganiques sont choisies dans le groupe constitué de dioxyde de silicium, de dioxyde de zirconium, d'oxyde d'aluminium, de dioxyde de titane, d'oxyde de cuivre, de $\gamma$-LiAlO$_2$ et de combinaisons de ceux-ci ; et dans lequel le diamètre moyen de particules des particules inorganiques est compris entre 1 nm et 200 nm.

7. Électrolyte de la revendication 1, dans lequel les première et deuxième matrices polymères comprennent chacune un polymère choisi indépendamment dans le groupe constitué de polyoléfine, de polyméthacrylate, de polyéther, de polysulfone, et de combinaisons de ceux-ci.

8. Électrolyte de la revendication 1, dans lequel le sel de lithium est choisi dans le groupe constitué d'hexafluorophosphate de lithium, de perchlorate de lithium, de tétrafluoroborate de lithium, de trifluorométhanesulfonate de lithium, de bis (trifluorométhanesulfonyl)imide de lithium, de bis(oxalato)borate de lithium, et de combinaisons de ceux-ci.

9. Procédé de préparation d'un électrolyte composite polymère selon la revendication 1, comprenant les étapes qui consistent :

à préparer une première matrice polymère comprenant des pores ;

à appliquer une solution de polymère à la première matrice polymère ;

à retirer le solvant de la solution de polymère de manière à disposer une deuxième matrice polymère dans les pores de la première matrice polymère ; et

à appliquer une solution de sel de lithium pour disposer du sel de lithium dans les pores de la première matrice polymère, où la quantité du sel de lithium est de 30% en poids à 95% en poids, sur la base du poids total des première et deuxième matrices polymères.

10. Procédé de la revendication 9, comprenant en outre les étapes qui consistent :

à fournir une base poreuse ; et

à appliquer la première matrice polymère à au moins une surface de la base poreuse ;

où l'étape qui consiste à fournir une première matrice polymère comprend le fait :

d'appliquer une solution comprenant le polymère de la première matrice polymère et un premier solvant de matrice polymère à au moins une surface de la base poreuse ; et

de retirer le premier solvant de matrice polymère de manière à former la première matrice polymère sur l'au moins une surface de la base poreuse.

**11.** Procédé selon la revendication 10, dans lequel la base poreuse comprend un polymère choisi dans le groupe constitué de polyéthylène, de polypropylène, de polyimide, de polyuréthane, de cellulose, de nylon, de polytétrafluoroéthylène, de copolymères de ceux-ci, et de combinaisons de ceux-ci.

**12.** Procédé selon la revendication 10, dans lequel les première et deuxième matrices polymères comprennent chacune un polymère choisi indépendamment dans le groupe constitué de polyoléfine, de polyméthacrylate, de polyéther, de polysulfone, et de combinaisons de ceux-ci ; les solvants des solutions de polymère sont choisis chacun indépendamment dans le groupe constitué d'acétone, de N,N-diméthylformamide, de N,N-diméthylacétamide, de N-méthyl-2-pyrrolidone, d'acétonitrile, de diméthylsulfoxyde, de butanone, de tétrahydrofuranne, et de combinaisons de ceux-ci ; et où au moins l'une des solutions de polymère comprend en outre un agent porogène ; et où l'agent porogène est choisi dans le groupe constitué de l'eau, de toluène, d'éthanol, de butanol, de glycérol, d'isopropanol, de butanediol, et de combinaisons de ceux-ci.

**13.** Batterie comprenant :

une cathode ;

une anode ; et

un électrolyte composite polymère tel que défini dans la revendication 1.

11

12

Fig. 1

11

21

22

12

23

Fig. 2

20kV      X2,000      10um              JSM-5610 LV

Fig. 3

20kV      X2,000      10um              JSM-5610 LV

Fig. 4